# EUROPEAN PATENT APPLICATION

(11) **EP 4 629 066 A2**
(43) Date of publication of application: **08.10.2025**
(21) Application number: 25171898.7
(22) Date of filing: 23.04.2025
(51) Int. Cl.: G06F 9/30, G06F 7/544

(54) **MULTI-PRECISION OPERAND COMPUTATION METHOD AND APPARATUS, DEVICE, AND MEDIUM**

(30) Priority: 24.04.2024 CN 202410501541
(71) Applicant: Beijing Horizon Information Technology Co., Ltd., Beijing 100094 (CN)
(72) Inventor: Ding, Jinnan, Beijing, 100094 (CN); WU, Xiangtao, Beijing, 100094 (CN)
(74) Representative: Patentanwälte Magenbauer & Kollegen Partnerschaft mbB

(57) **Abstract**

Embodiments of this disclosure disclose a multi-precision operand computation method and apparatus, a device, and a medium. The method includes: determining, based on first data precision of an input operand, at least one input sub-operand with second data precision that corresponds to the input operand, where the second data precision is data precision supported by a computation unit, and a data bit width of the first data precision is greater than or equal to that of the second data precision; controlling the computation unit to individually compute each input sub-operand to obtain a corresponding computation sub-result for each input sub-operand; and determining a computation result corresponding to the input operand based on the computation sub-result individually corresponding to each input sub-operand.

## Description

### FIELD OF THE INVENTION

This disclosure relates to computer technologies, and in particular, to a multi-precision operand computation method and apparatus, a device, and a medium.

### BACKGROUND OF THE INVENTION

In neural network related computations, data computations with different precision are usually involved, such as computations involving vectors, matrices, and tensors with mixed precision. A computation unit in a hardware design often supports computations with single precision, which easily leads to a significant increase in hardware resources. In related technologies, for data computations with mixed precision, data bandwidth (which is also referred to as a data bit width) of high-precision data is generally reduced through low-bit quantization and other ways to match data bandwidth of low-precision data, and corresponding computations are completed through corresponding computation units. The way of reducing the data bandwidth of the high-precision data can easily lower precision of the data computations.

### SUMMARY OF THE INVENTION

To resolve the foregoing technical problem, embodiments of this disclose provide a multi-precision operand computation method and apparatus, a device, and a medium, to ensure precision of data computations.

According to a first aspect of this disclosure, a multi-precision operand computation method is provided, including: determining, based on first data precision of an input operand, at least one input sub-operand with second data precision that corresponds to the input operand, where the second data precision is data precision supported by a computation unit, and a data bit width of the first data precision is greater than or equal to that of the second data precision; controlling the computation unit to individually compute each input sub-operand to obtain a corresponding computation sub-result for each input sub-operand; and determining a computation result corresponding to the input operand based on the computation sub-result individually corresponding to each input sub-operand.

According to a second aspect of this disclosure, a multi-precision operand computation apparatus is provided, including: a first processing module, configured to determine, based on first data precision of an input operand, at least one input sub-operand with second data precision that corresponds to the input operand, where the second data precision is data precision supported by a computation unit, and a data bit width of the first data precision is greater than or equal to that of the second data precision; a control module, configured to control the computation unit to individually compute each input sub-operand to obtain a corresponding computation sub-result for each input sub-operand; and a second processing module, configured to determine a computation result corresponding to the input operand based on the computation sub-result individually corresponding to each input sub-operand.

According to a third aspect of this disclosure, a computer readable storage medium is provided. The storage medium stores a computer program, and the computer program is used for implementing the multi-precision operand computation method according to any one of the foregoing embodiments of this disclosure.

According to a fourth aspect of this disclosure, an electronic device is provided. The electronic device includes: a processor; and a memory configured to store processor-executable instructions. The processor is configured to read the executable instructions from the memory, and execute the instructions to implement the multi-precision operand computation method according to any one of the foregoing embodiments of this disclosure.

According to a fifth aspect of this disclosure, a computer program product is provided. When instructions in the computer program product are executed by a processor, the multi-precision operand computation method according to any one of the foregoing embodiments of this disclosure is implemented.

According to the multi-precision operand computation method and apparatus, the device, and the medium that are provided in the embodiments of this disclosure, during a data computation, at least one input sub-operand with the second data precision that corresponds to the input operand may be determined based on the first data precision of the input operand, so that data precision of the input sub-operand is the data precision supported by the computation unit. In this way, the computation unit may be controlled to individually compute each input sub-operand to obtain the corresponding computation sub-result for each input sub-operand; and the computation result corresponding to the input operand may be determined based on the computation sub-result individually corresponding to each input sub-operand. The input operand may be split separately into multiple input sub-operands with the second data precision to be computed, and the second data precision is the data precision supported by the computation unit. Therefore, computations for input operands with different data precision may be performed by using computation units with unified data precision, which may avoid reducing data bandwidth of the input operand through low-bit quantization and other ways, thereby ensuring that computation precision of the input operand is not reduced.

### BRIEF DESCRIPTION OF THE DRAWINGS

FIG. 1 is an exemplary application scenario of a multi-precision operand computation method according to this disclosure;
FIG. 2 is a schematic flowchart of a multi-precision operand computation method according to an exemplary embodiment of this disclosure;
FIG. 3 is a schematic flowchart of a multi-precision operand computation method according to another exemplary embodiment of this disclosure;
FIG. 4 is a schematic flowchart of a multi-precision operand computation method according to still another exemplary embodiment of this disclosure;
FIG. 5 is a schematic flowchart of a multi-precision operand computation method according to yet another exemplary embodiment of this disclosure;
FIG. 6 is a schematic diagram of a storage principle of an input sub-operand according to an exemplary embodiment of this disclosure;
FIG. 7 is a schematic diagram of a computation principle of a mixed-precision multiplication operation according to an exemplary embodiment of this disclosure;
FIG. 8 is a schematic diagram of an operation principle of a first type according to an exemplary embodiment of this disclosure;
FIG. 9 is a schematic diagram of an operation principle of data rearrangement and exchange according to an exemplary embodiment of this disclosure;
FIG. 10 is a schematic diagram of a principle of data precision extension according to an exemplary embodiment of this disclosure;
FIG. 11 is a schematic diagram of a structure of a multi-precision operand computation apparatus according to an exemplary embodiment of this disclosure;
FIG. 12 is a schematic diagram of a structure of a multi-precision operand computation apparatus according to another exemplary embodiment of this disclosure; and
FIG. 13 is a diagram of a structure of an electronic device according to an embodiment of this disclosure.

### DETAILED DESCRIPTION OF THE EMBODIMENTS

To explain this disclosure, exemplary embodiments of this disclosure are described below in detail with reference to accompanying drawings. Obviously, the described embodiments are merely a part, rather than all of embodiments of this disclosure. It should be understood that this disclosure is not limited by the exemplary embodiments.

It should be noted that unless otherwise specified, the scope of this disclosure is not limited by relative arrangement, numeric expressions, and numerical values of components and steps described in these embodiments.

### Overview of this disclosure

In a process of implementing this disclosure, the inventor finds that in neural network related computations, data computations with different precision are usually involved, such as computations involving vectors, matrices, and tensors with mixed precision. A computation unit in a hardware design often supports computations with single precision, which easily leads to a significant increase in hardware resources. In related technologies, for data computations with mixed precision, data bandwidth (which is also referred to as a data bit width) of high-precision data is generally reduced through low-bit quantization and other ways to match data bandwidth of low-precision data, and corresponding computations are completed through corresponding computation units. The way of reducing the data bandwidth of the high-precision data can easily lower precision of the data computations.

### Exemplary overview

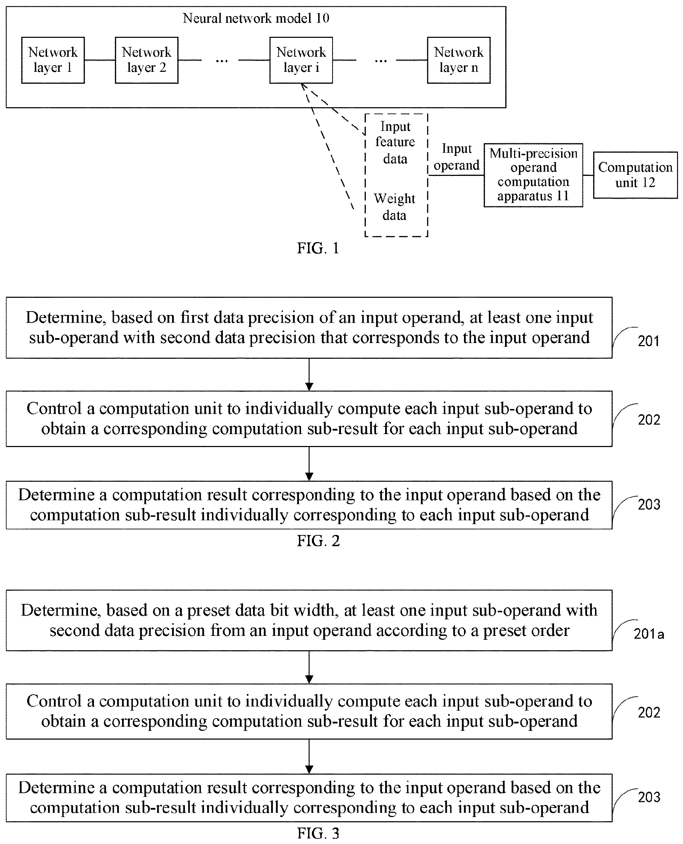

FIG. 1 is an exemplary application scenario of a multi-precision operand computation method according to this disclosure. As shown in FIG. 1, in an inference acceleration scenario of a neural network model 10 for object detection, semantic segmentation, image classification, speech recognition, and the like, for any network layer i in the neural network model 10, if the network layer i needs to complete a binary operation for input feature data and weight data, an input operand may be obtained based on the input feature data and the weight data of the network layer i. In other words, the input operand may include two operands. If the network layer i needs to complete a unary operation for the input feature data, an input operand may be obtained based on the input feature data of the network layer i. In other words, the input operand may include one operand. The neural network model 10 may run on a processor (CPU). For operations that need to be accelerated, the input operand may be input into a neural network processor, which may include a multi-precision operand computation apparatus 11 and a computation unit 12 in this disclosure, so that the multi-precision operand computation method in this disclosure (which is implemented in the multi-precision operand computation apparatus 11 in this disclosure) may be used to obtain a computation result corresponding to the input operand. Specifically, at least one input sub-operand with second data precision that corresponds to the input operand may be determined based on first data precision of the input operand. For example, if the first data precision of the input operand is int32 and data precision (the second data precision) supported by the computation unit 12 is int8, 4 input sub-operands with the second data precision that correspond to the input operand may be determined based on the first data precision of the input operand. Thus, the computation unit 12 may be controlled to individually compute each input sub-operand to obtain a corresponding computation sub-result for each input sub-operand. The computation result corresponding to the input operand is determined based on each computation sub-result. The binary operation is used as an example. For example, the input operand includes a first operand and a second operand that may have a same or different first data precision. For example, if the data precision of the first operand and the second operand are both int16, and a computation to be completed is a bitwise AND operation for the first operand and the second operand, at least one corresponding input sub-operand with the second data precision may be determined for each input operand. For example, if the second data precision is int8, 2 int8-input sub-operands (which may be referred to as a first input sub-operand or a first sub-operand) may be determined for the first operand, and 2 int8-input sub-operands (which may be referred to as a second input sub-operand or a second sub-operand) may also be determined for the second operand. If being a bitwise AND operational computation unit that supports int8, the computation unit 12 may be controlled to respectively perform bitwise AND operational computations on the 2 input sub-operands of the first operand and the corresponding bits of input sub-operands of the second operand, to obtain the computation sub-result individually corresponding to each input sub-operand. Further, the computation result corresponding to the input operand is obtained based on a correspondence between the computation sub-result of the input sub-operand and each bit of the computation result of the input operand. For example, if the first operand is 1001110000110100 and the second operand is 1100011100010101, it may be learned that the two first input sub-operands corresponding to the first operand are high 8-bit 10011100 and low 8-bit 00110100, and the two second input sub-operands corresponding to the second operand are high 8-bit 11000111 and low 8-bit 00010101. The computation unit 12 is controlled to perform a bitwise AND operation (10011100 and 11000111) on the high 8-bit first input sub-operand and the high 8-bit second input sub-operand, to obtain a high 8-bit computation sub-result of 10000100. The computation unit 12 is controlled to perform a bitwise AND operation (00110100 and 00010101) on the low 8-bit first input sub-operand and the low 8-bit second input sub-operand, to obtain a low 8-bit computation sub-result of 00010100. Further, it is determined based on the high 8-bit computation sub-result and the low 8-bit computation sub-result that the computation result corresponding to the input operand is 1000010000010100. For a case where operations for various bits affect each other (for example, a low-bit operation affects a high-bit operation, or a high-bit operation may directly determine a final computation result), such as an addition operation or a multiplication operation, the computation result of the input operand may be determined according to a specific operation rule through the computation sub-result of the input sub-operand. For example, for the multiplication operation, a first operand A corresponds to two first input sub-operands, which respectively are low 8-bit *a*0 and high 8-bit *a*1, and a second operand B corresponds to two second input sub-operands, which respectively are low 8-bit *b*0 and high 8-bit *b*1. An operation result of A * B may be obtained according to an operation rule of *A * B = a*1 ** b*1 * 2¹⁶ + 2⁸ * (*a*0 * *b*1 + *a*1 * *b0*) *+ a*0 * *b0* through operations (such as *a*1 ** b*1, *a*0 * *b*1, *a*1 * b0, and *a*0 * b0) between the first input sub-operand and the second input sub-operand. For a unary operation, such as population count (that is, counting a quantity of 1s in an operand) or leading zero count (that is, computing leading zeros), each input sub-operand corresponding to the input operand may be computed separately. The computation result of the input operand may be obtained based on an association relationship between the computation sub-result of each input sub-operand and the computation result of the input operand. In view of the above, because computation of input operands with higher and mixed precision may be split into computations of multiple input sub-operands with lower precision supported by the computation unit 12, data computation precision of the input operand may be ensured, thereby avoiding low-bit quantization for the high-precision input operand, which helps to improve data precision of entire model inference.

It should be noted that the multi-precision operand computation method is this disclosure may be applied to any scenario or field that requires computational acceleration, such as but not limited to intelligent driving, security monitoring, mobile terminals, and medical image processing. Moreover, the multi-precision operand computation method in this disclosure is not limited to inference acceleration computations of the neural network models, but may also be used for any other data computation that needs to be implemented through hardware computation units.

### Exemplary method

FIG. 2 is a schematic flowchart of a multi-precision operand computation method according to an exemplary embodiment of this disclosure. This embodiment may be applicable to an electronic device, such as an in-car computing platform. As shown in FIG. 2, the method includes the following steps.

Step 201. Determine, based on first data precision of an input operand, at least one input sub-operand with second data precision that corresponds to the input operand.

The second data precision is data precision supported by a computation unit, and a data bit width of the first data precision is greater than or equal to that of the second data precision.

In some optional embodiments, there may be one or more input operands, and a quantity of elements in each input operand is consistent with a specific quantity of operands supported by the computation unit. For example, if the computation unit is a unit that supports unary operations, the input operand is a unary operand, that is, each input operand includes one operand. For example, for a shift operation, counting a quantity of 1s, and computing leading zeros, if the computation unit is a unit that supports binary operations, the input operand is a binary operand, that is, each input operand includes two operands. For example, the input operand includes a multiplier, a multiplicand, a subtrahend, a minuend, and two operands that require a bitwise AND operation, a bitwise OR operation, and a bitwise XOR operation. For a case where the input operand includes two operands, the first data precision of the two operands may be same or different. This may be specifically set according to actual operation requirements. For example, for the bitwise AND operation and the bitwise OR operation, the first data precision of the two operands is the same. For the multiplication operation, the first data precision of the two operands may be same or different. For example, the multiplication operation may be an operation between feature data with higher precision and weight data with lower precision.

In some optional embodiments, the second data precision is the data precision supported by the computation unit. Therefore, the second data precision may be set according to specific functions of the computation unit. The data bit width of the first data precision may be greater than or equal to that of the second data precision. Therefore, through the computation unit, high-precision and mixed precision data computations may be completed, and data computations with precision that is same as the data precision supported by the computation unit may also be completed. For example, if the computation unit supports a multiplication operation of int8 * int8, the data precision of either of the two operands in the input operand may be int8 or may be greater than int8. Optionally, a data bit width of any operand in the input operand may be an integer multiple of that of the second data precision, which is more conducive to quickly determining the input sub-operand corresponding to the input operand, and helps to improve utilization of storage resources and computing resources. For example, if the data bit width of the second data precision is int8, the data bit width of the first data precision may be int8, int16, int24, or int32. For a case where the data bit width of the first data precision is not an integer multiple of that of the second data precision, the input operand may be padded, so that a data bit width of the padded input operand is an integer multiple of that of the second data precision. For example, if the data bit width of the second data precision is int8 and the data bit width of the first data precision is int12, an int16-input operand may be obtained by padding zeros at high bits for the input operand, and then two int8-input sub-operands may be determined based on the int16-input operand.

In some optional embodiments, the computation unit may be a hardware unit capable of performing corresponding operations on the input operand. For example, the computation unit may include a multiplication computation unit, an addition computation unit, a shift computation unit, a bitwise AND operational computation unit, and the like. There may be one or more computation units.

In some optional embodiments, each computation unit may be controlled by using a controller (which may also be referred to as a main control module), and the multi-precision operand computation method in the embodiments of this disclosure may be applied to the controller. In other words, a multi-precision operand computation apparatus in embodiments of this disclosure may be the main control module or a device disposed in the main control module. The input operand may be obtained from a computation task, which may be issued to the main control module by a CPU. In addition to the input operand, the computation task may also include operation related information, data precision of the input operand, and other information. For example, the operation related information includes a specific operation type. The computation unit corresponding to the input operand may be determined based on the computation task, so as to obtain the data precision supported by the computation unit to as the second data precision.

Step 202. Control a computation unit to individually compute each input sub-operand to obtain a corresponding computation sub-result for each input sub-operand.

In some optional embodiments, for different computation units, a control mode for the computation unit may be determined based on an association relationship between an operation of the computation unit on the input sub-operand and an actual operation on the input operand. Thus, the computation unit is controlled according to the control mode to individually compute each input sub-operand to obtain the corresponding computation sub-result for each input sub-operand. For example, for the foregoing *A * B = a*1 ** b*1 * 2¹⁶ + 2⁸ * (*a*0 * *b*1 + *a*1 * *b0)* + *a*0 * *b*0, the computation unit is controlled to compute computation sub-results of *a*1 * *b*1, *a*0 * *b*1, *a*1 * *b*0, and *a*0 * *b*0, respectively. Thus, based on each computation sub-result, by shifting (shifting to the left by 16 bits) the computation sub-result of *a*1 * *b*1 and shifting (shifting to the left by 8 bits) the computation sub-results of *a*0 * *b*1 and *a*1 * *b*0, a computation result of *A* * *B* is obtained by adding a result obtained through shifting to *a*0 ** b*0 according to the foregoing operation rule. Post-processing operations such as shifting and addition may be further implemented through corresponding computation units, so as to further improve computation efficiency.

In some optional embodiments, the control mode for the computation unit may be implemented through rearrangement and storage of the input sub-operands and setting the corresponding access order. For example, various input sub-operands of a same input operand may be stored in storage spaces with different addresses, so as to control an address access order of various storage spaces to achieve loading and operational control of the input sub-operands, thereby accurately obtaining the computation sub-result individually corresponding to each input sub-operand. For a binary operation, the computation sub-result individually corresponding to each input sub-operand may include computation sub-results respectively corresponding to various first input sub-operands (or referred to as computation sub-results respectively corresponding to various second input sub-operands). There may be one or more computation sub-results corresponding to each first input sub-operand, and a computation sub-result corresponding to the first input sub-operand *a*0 described above includes two computation sub-results: *a*0 * *b0* and *a*0 * *b*1.

In some optional embodiments, for a case where operations for various bits of the input operand are independent of each other and do not affect each other, such as the bitwise AND operation and the bitwise OR operation, the computation sub-result may include an operation result corresponding to the input sub-operand. Operations for various bits of the addition operation, comparing values, finding a maximum value, and finding a minimum value may affect each other. For example, operations for low bits of the addition operation may generate a carry and affect a higher bit. If a value may be determined by a high bit in the operation of finding a maximum value, a final computation result may be determined, and there is no need to compare lower bits. The computation sub-result may include an operation result and a marker bit (which may be referred to as a flag status). The flag status is used to indicate influence between a high-bit operation and a low-bit operation. For example, for the addition operation, the flag status may indicate whether a low-bit computation sub-result has a carry; and for the operation of comparing values or finding a minimum value, the flag status may indicate whether a high-bit computation sub-result can determine a final computation result. If the high-bit computation sub-result can already obtain a comparison result of values of two operands or a maximum value between the two operands, a low-bit operation may be terminated to reduce unnecessary computations, thereby further improving the computation efficiency.

Step 203. Determine a computation result corresponding to the input operand based on the computation sub-result individually corresponding to each input sub-operand.

After the computation sub-result individually corresponding to each input sub-operand is obtained, the computation result corresponding to the input operand may be determined based on the computation sub-result individually corresponding to each input sub-operand according to the operation rule of the input operand or the association relationship between the operation rule of the input operand and the computation sub-result of the input sub-operand. For example, for computation sub-results where operations on high and low-bit do not affect each other, the computation result corresponding to the input operand may be obtained by merging computation sub-results in an order from high bits to low bits of input sub-operands within the input operand. Alternatively, the computation sub-results are written into a specified result storage space corresponding to the input operand in an order from high bits to low bits, to obtain the computation result corresponding to the input operand. For a case where high-bit operations and low-bit operations affect each other, post-processing operations may be performed on each computation sub-result according to a specific influence rule, to obtain the computation result corresponding to the input operand. For example, regarding the addition operation, a carry from a lower bit is added to a computation sub-result at a higher bit to ensure precision of the computation.

According to the multi-precision operand computation method provided in the embodiments of this disclosure, at least one input sub-operand with the second data precision that corresponds to the input operand may be determined based on the first data precision of the input operand, so that data precision of the input sub-operand is the data precision supported by the computation unit. In this way, the computation unit may be controlled to individually compute each input sub-operand to obtain the corresponding computation sub-result for each input sub-operand; and the computation result corresponding to the input operand may be determined based on the computation sub-result individually corresponding to each input sub-operand. The input operand may be split into multiple input sub-operands with the second data precision to be computed separately, and the second data precision is the data precision supported by the computation unit. Therefore, computations for input operands with different data precision may be performed by using unified computation units, which may avoid reducing data bandwidth of the input operand through low-bit quantization and other ways, thereby ensuring that computation precision of the input operand is not reduced.

FIG. 3 is a schematic flowchart of a multi-precision operand computation method according to another exemplary embodiment of this disclosure.

In some optional embodiments, as shown in FIG. 3, on the basis of the embodiment shown in FIG. 2, step 201 of determining, based on the first data precision of the input operand, at least one input sub-operand with the second data precision that corresponds to the input operand may include the following steps.

Step 201a. Determine, based on a preset data bit width, the at least one input sub-operand with the second data precision from the input operand according to a preset order.

The data bit width of the second data precision is same as the preset data bit width. The preset data bit width may be set according to a data bit width supported by the computation unit. For example, the preset data bit width may be 4 bits or 8 bits. The preset order may be set based on characteristics of specific operations that can be completed by the computation unit. The preset order may be an order from high bits to low bits or from low bits to high bits.

In some optional embodiments, an apparatus in the embodiments of this disclosure may receive the input operand through a data input port. After the input operand is transmitted to the data input port, each input sub-operand with the second data precision is determined based on the preset data bit width from the input operand in the data input port according to the preset order. For example, if the preset order is the order from high bits to low bits, reading is performed from high bits to low bits of the input operand based on the preset data bit width. An input sub-operand is obtained each time an element with the preset data bit width is read. For example, if the data bit width of the input operand is int32 and the preset data bit width is int8, reading is performed from high bits to low bits or from low bits to high bits. In this case, a read 8-bit element is used as one input sub-operand, so as to obtain 4 int8-input sub-operands. For the input operand in the binary operation, each operand in the input operand is read according to the preset order, so as to obtain a set of first input sub-operands and a set of second input sub-operands. For example, if the input operand includes an operand A (int32) and an operand B (int16), 4 first input sub-operands and 2 second input sub-operands may be obtained.

In some optional embodiments, each input sub-operand may be stored separately. For example, each time an input sub-operand is read, this input sub-operand may be stored. Sub-operands of a same input operand may be stored in different storage spaces for data loading for subsequent computations.

In the embodiments, the input operand is read based on the preset data bit width according to the preset order, to determine the at least one input sub-operand with the second data precision, so as to achieve effective splitting of the input operand, which provides valid input sub-operands for computations of computation units with a unified data bit width. In this way, high-precision operations of multiple input operands with different precision may be achieved by using the computation units with the unified data bit width. On one hand, this helps to ensure precision of data computations. On the other hand, because the input operand with a higher bit width is split into input sub-operands with lower bit widths, unified storage resources with lower bit widths may be set, which helps to improve utilization of the storage resources and the computation units. Thus, hardware costs may be reduced.

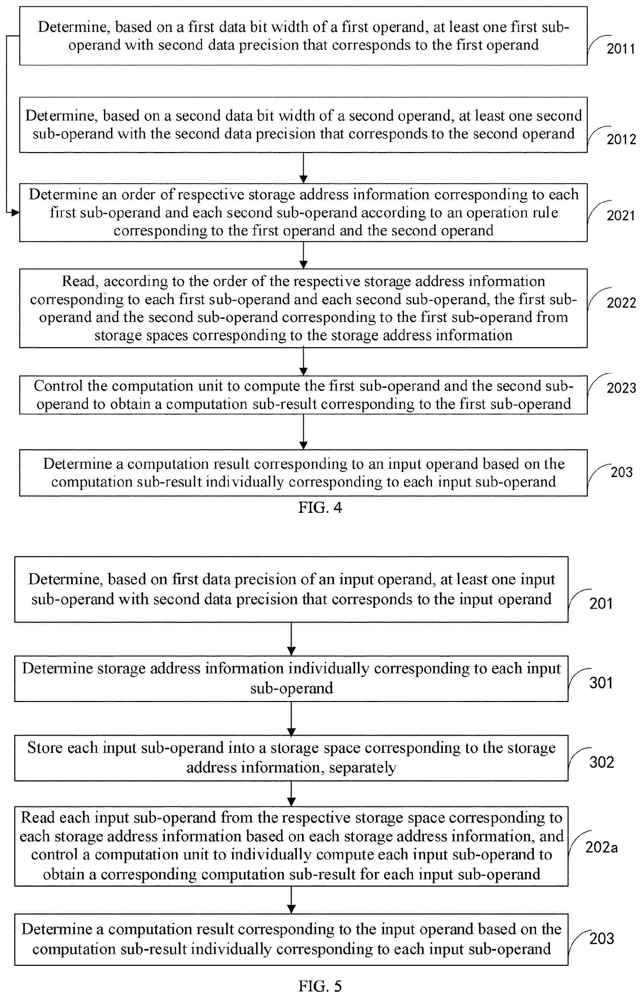

FIG. 4 is a schematic flowchart of a multi-precision operand computation method according to still another exemplary embodiment of this disclosure.

In some optional embodiments, on the basis of the embodiment shown in FIG. 2, the input operand may include a first operand and a second operand; and the first data precision may include a first data bit width of the first operand and a second data bit width of the second operand. As shown in FIG. 4, step 201 of determining, based on the first data precision of the input operand, at least one input sub-operand with the second data precision that corresponds to the input operand may include the following steps.

Step 2011. Determine, based on a first data bit width of a first operand, at least one first sub-operand with the second data precision that corresponds to the first operand.

The first data bit width may be same as or different from the second data bit width. Each first sub-operand corresponding to the first operand may be determined based on the first data bit width of the first operand and the data bit width of the second data precision. For example, if the first data bit width is int32 and the data bit width of the second data precision is int4, 8 first sub-operands with the second data precision that correspond to the first operand may be determined.

Step 2012. Determine, based on a second data bit width of a second operand, at least one second sub-operand with the second data precision that corresponds to the second operand.

The input sub-operand includes the first sub-operand and the second sub-operand. A principle of the second sub-operand is similar to that of the first sub-operand, and details are not described herein.

It should be noted that steps 2011 and 2012 are not in a sequential order.

In the embodiments, for the input operand in the binary operation, the sub-operands corresponding to the first operand and the second operand may be determined separately, and both the first operand and the second operand may be split into sub-operands with the data bit width supported by the computation unit, so as to compute the computation sub-result of the sub-operand by using the computation unit.

In some optional embodiments, as shown in FIG. 4, on the basis of the embodiment shown in FIG. 2, step 202 of controlling the computation unit to individually compute each input sub-operand to obtain the corresponding computation sub-result for each input sub-operand may include the following steps.

Step 2021. Determine an order of respective storage address information corresponding to each first sub-operand and each second sub-operand according to an operation rule corresponding to the first operand and the second operand.

The operation rule corresponding to the first operand and the second operand may refer to an association rule for a specific operation process of performing operations on the first operand and the second operand and an operation process of the sub-operand. For example, the operation rule may be an association rule related to the addition operation, an association rule related to the bitwise AND operation, an association rule related to the bitwise OR operation, an association rule related to the bitwise XOR operation, an association rule related to the multiplication operation, or the like. For example, both a first operand A and a second operand B are of int16, and the computation unit is of int8. A high 8-bit first sub-operand corresponding to the first operand is *a*1, and a low 8-bit first sub-operand is *a*0, that is *A* = *a*1 * 2⁸ + *a*0. A high 8-bit second sub-operand corresponding to the second operand is *b*1, and a low 8-bit second sub-operand is *b*0, that is, *B* = *b*1 * 2⁸ + *b*0*.* The association rule related to the multiplication operation may be represented as *A * B = a*1 * *b*1 * 2¹⁶ + 2⁸ * (*a*0 * *b*1 + *a*1 * *b0*) *+ a*0 * *b*0, and the association rule related to the bitwise AND operation may be represented as *A and B =* [(*a*1 *and b*1) * 2⁸ + (*a*0 *and b*0)]. The order of the respective storage address information corresponding to each first sub-operand and each second sub-operand may be determined according to the operation rule corresponding to the first operand and the second operand. This order indicates a data loading order (or referred to as an access order) when the computation unit performs a computation. For example, for the above multiplication operation, it is needed to load *a*1 and *b*1 simultaneously (when the computation unit has two input ports) or sequentially (when the computation unit only has one input port) to enable the computation unit to complete a computation of *a*1 * *b*1. Subsequently, *a*0 may be loaded (or both *a*0 and *b*1 may be loaded simultaneously or sequentially), and *a*0 and the already loaded *b*1 may be provided to the computation unit to compute *a*0 * *b*1. Subsequently, *b*0 may be loaded to compute *a*1 * *b*0 and *a*0 * *b*0. In practical applications, it is determined that the order of the respective storage address information corresponding to each first sub-operand and each second sub-operand may be set according to actual requirements, which is not limited to the foregoing order. For example, *a*0 and *b*0 may be loaded first, which is not specifically limited. For the bitwise AND operation, similarly, *a*1 and *b*1 may be loaded first to compute *a*1 *and b*1, and then *a*0 and *b*0 are loaded to compute *a*0 *and b0.* Alternatively, *a*0 and *b*0 are loaded first, and then *a*1 and *b*1 are loaded.

Step 2022. Read, according to the order of the respective storage address information corresponding to each first sub-operand and each second sub-operand, the first sub-operand and the second sub-operand corresponding to the first sub-operand from storage spaces corresponding to the respective storage address information.

After the order of the respective storage address information corresponding to each first sub-operand and each second sub-operand is determined, the corresponding first sub-operand and the second sub-operand corresponding to the first sub-operand may be read according to the order from the storage spaces corresponding to the respective storage address information. As described in the foregoing example, each first sub-operand may correspond to one or more second sub-operands. For example, in the multiplication operation, *a*0 corresponds to *b*0 and b1. Alternatively, each second sub-operand may correspond to one or more first sub-operands. During each computation, a computation unit may complete the operations of one first sub-operand and one corresponding second sub-operand. If there are multiple computation units, the operations of each set of first sub-operands and second sub-operands may be completed concurrently. In this case, multiple sets of first sub-operands and corresponding second sub-operands may be loaded according to the order of the respective storage address information corresponding to each first sub-operand and each second sub-operand, and concurrent computations may be performed by using the multiple computation units. For example, *a*1 and *b*1, *a*0 and *b*1, *a*1 and b0, and *a*0 and *b*0 may be loaded successively, and computation sub-results respectively corresponding to various first sub-operands may be computed concurrently by using the multiple computation units.

Step 2023. Control the computation unit to compute the first sub-operand and the second sub-operand to obtain the computation sub-result corresponding to the first sub-operand.

For any computation unit, after a set of first sub-operands and second sub-operands are read, the computation unit may be controlled to compute the first sub-operand and the second sub-operand to obtain the computation sub-result corresponding to the first sub-operand, such as a computation sub-result of *a*0 * *b*1 and a computation sub-result of *a*0 *and b0.*

In some optional embodiments, the loading of the first sub-operand and the second sub-operand may be controlled by using a working clock. If the computation unit has two input ports, the first sub-operand and the second sub-operand may be loaded concurrently in one clock cycle, and the computation unit may be controlled to compute the loaded first sub-operand and second sub-operand. If the computation unit has only one input port, the first sub-operand may be loaded in a clock cycle, the second sub-operand may be loaded in a next clock cycle, and the computation unit may be controlled to compute the first sub-operand and the second sub-operand.

In some optional embodiments, the respective storage address information corresponding to each first sub-operand and each second sub-operand may be storage address information of a storage space of an SRAM (static random access memory) within a chip where the computation unit is located. The first sub-operand and the second sub-operand that are read from the storage space corresponding to the storage address information may be cached in a data register corresponding to the computation unit, and may be input into the computation unit through the data register to complete the corresponding computation, to obtain the computation sub-result.

In the embodiments, for the binary operation, the order of the respective storage address information corresponding to each first sub-operand and each second sub-operand may be determined according to the operation rule corresponding to the first operand and the second operand, so that the first sub-operand and the second sub-operand corresponding to the first sub-operand are read from the storage spaces corresponding to the storage address information according to the order of the respective storage address information corresponding to each first sub-operand and each second sub-operand, and are provided to the computation unit for computations. An access order of each first sub-operand and each second sub-operand may be accurately controlled according to the order of the respective storage address information corresponding to each first sub-operand and each second sub-operand, to provide an accurate and valid input sub-operand for the computation unit, thereby facilitating computations of input operands with various data precision through computation units with a unified data bit width.

FIG. 5 is a schematic flowchart of a multi-precision operand computation method according to yet another exemplary embodiment of this disclosure.

In some optional embodiments, on the basis of the embodiment shown in FIG. 2, before step 202 of controlling the computation unit to individually compute each input sub-operand to obtain the corresponding computation sub-result for each input sub-operand, the method in the embodiments of this disclosure may further include the following steps.

Step 301. Determine storage address information individually corresponding to each input sub-operand.

The storage address information corresponding to the input sub-operand may include an offset address. To be specific, the storage address information individually corresponding to each input sub-operand may be determined through different offset addresses.

Step 302. Store each input sub-operand separately into a storage space corresponding to the storage address information.

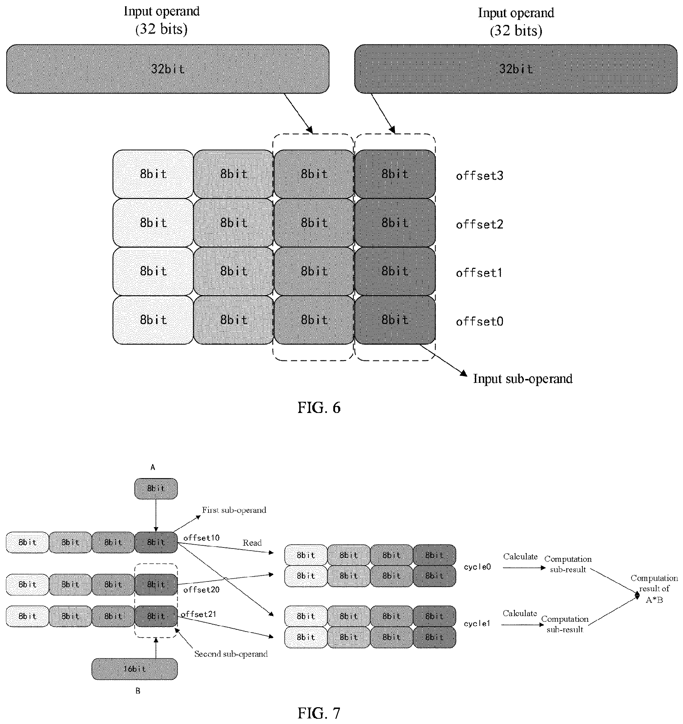

For example, FIG. 6 is a schematic diagram of a storage principle of an input sub-operand according to an exemplary embodiment of this disclosure. As shown in FIG. 6, for example, the data bit width of the second data precision is int8 and the data bit width of the first data precision is int32. The input operand is stored in 4 storage spaces with different offset addresses (offset0, offset1, offset2, and offset3), where every 8 bits is taken as a sub-operand. Different gray scales in the figure may represent different input operands. Each input operand may be split into multiple input sub-operands for rearrangement and storage, so as to facilitate data loading during subsequent computations.

In some optional embodiments, the storage address information individually corresponding to each input sub-operand may include one or more offset addresses. For a case of one offset address, the data bit width of the input sub-operand is consistent with that of the storage unit in the storage space. A shown in FIG. 6, the data bit width of the input sub-operand is 8 bits, and each storage unit in the storage space may store 8-bit data. For a case where the storage address information includes multiple offset addresses, the data bit width of the input sub-operand may be greater than that of the storage unit in the storage space. For example, if the data bit width of the input sub-operand is 8 bits and the data bit width of the storage unit is 4 bits, each input sub-operand may occupy two 4-bit storage units. The two storage units may be two storage units with consecutive addresses, or may be storage units in different storage spaces. For example, by storing 4 8-bit input sub-operands in 8 storage spaces with different offset addresses, wastes of storage spaces may be reduced through fine-grained storage spaces.

Step 202 of controlling the computation unit to individually compute each input sub-operand to obtain the corresponding computation sub-result for each input sub-operand may include the following step.

Step 202a. Read each input sub-operand from the respective storage space corresponding to each storage address information based on each storage address information, and control the computation unit to individually compute each input sub-operand to obtain the corresponding computation sub-result for each input sub-operand.

For the binary operation, for specific operations of step 202a, reference may be made to the foregoing embodiments. For the unary operation, an order of the respective storage address information corresponding to each input sub-operand may be determined according to an operation rule of the unary operation. Thus, according to the order of all the storage address information, the corresponding input sub-operand may be read from each storage space and may be provided to the computation unit for computation. For the unary operation, since each computation unit computes only one operand each time, the order of all the storage address information may be an order from storage address information of a high-bit sub-operand to storage address information of a low-bit sub-operand, or may be an order from storage address information of a low-bit sub-operand to storage address information of a high-bit sub-operand.

In some optional examples, for an operation of counting a quantity of 1s, if high-bit sub-operands to low-bit sub-operands are stored in offsetm to offset0 sequentially, a reading order may be from the offsetm to the offset0 or from the offset0 to the offsetm.

In some optional examples, if first sub-operands from high bits to low bits are stored in offset1m to offset10 sequentially, and second sub-operands from high bits to low bits are stored in offset2m to offset20 sequentially, for a binary bitwise AND operation, a binary bitwise OR operation, a binary bitwise XOR operation, and other types of operations, operations for various bits are independent of each other and do not affect each other. In this case, the reading order may be from the offset1m and the offset2m to the offset10 and the offset20. To be specific, the first sub-operands in the offset1m and the second sub-operands in the offset2m (which may be referred to as a set of sub-operands) are read first for computations, and then the first sub-operands in the offset1(m-1) and the second sub-operands in the offset2(m-1) are read. The others may be obtained by analogy, until the offset10 and the offset20 are read to complete computations of each set of first sub-operands and second sub-operands. The reading order may also be from the offset10 and the offset20 to the offset1m and the offset2m. For comparing values, finding a maximum value, and finding a minimum value, an operation result of a high bit may affect whether operations for a low bit are performed, and the reading order may be from the offset1m and the offset2m to the offset10 and the offset20. For an addition operation and a subtraction operation, an operation result of a low bit may generate a carry, which affects an operation result of a high bit. The reading order may be from the offset10 and the offset20 to the offset1m and the offset2m.

In the embodiments, the storage address information individually corresponding to each input sub-operand is determined, so that each input sub-operand is stored in the corresponding storage space to achieve the rearrangement and storage of the input operands. The input operand is split into sub-operands, and the reading of each input sub-operand is controlled during computation to provide accurate and valid input sub-operands for the computation unit, so as to complete the accurate and reliable computations of the input sub-operands by using the computation unit.

In some optional embodiments, on the basis of the embodiment shown in FIG. 2, reading each input sub-operand from the respective storage space corresponding to each storage address information based on each storage address information may include:

determining an operation type corresponding to the input operand; determining the order of the respective storage address information corresponding to each input sub-operand based on the operation type; and reading the input sub-operand from the respective storage space corresponding to each storage address information according to the order of all the storage address information.

The operation type may be classified based on specific operational properties of the input operand.

In some optional embodiments, the operation type may include a first type, a second type, and a third type. The first type may refer to operations where high-bit operations and low-bit operations are independent of each other and do not affect each other. For example, the first type may include the bitwise AND operation, the bitwise OR operation, the bitwise XOR operation, and a SELECT operation. The second type may refer to operations that have a certain correlation between high-bit operations and low-bit operations. For example, the second type may include operations such as a comparison operation, finding a minimum value (min), finding a maximum value (max), counting a quantity of 1s (population count), and computing leading zeros (lead zero count). The third type may include arithmetic operations with mixed precision (such as multiplication, addition, and subtraction), operations that cause a data bit width to be doubled (such as the multiplication operation), and the like. The operation type may also include data rearrangement, data exchange, and other types. The operation type corresponding to the input operand is determined based on specific operations corresponding to the input operand and type classification of the operations.

In some optional embodiments, a loading order (that is, the reading order) of the storage address information may be determined based on the operation type corresponding to the input operand. For example, an order of offset addresses from the offset0 to the offsetm that are included in the storage address information may be determined. This order determines a loading order of the input sub-operands during the computation process, so as to accurately control the computations of the computation unit for the input sub-operands.

In some optional embodiments, the operation type may also be subdivided into different subtypes, and the order of all the storage address information may be determined based on the subtypes.

In the embodiments, determining the operation type corresponding to the input operand helps to obtain the order of the storage address information of all input sub-operands, so that the loading order of all the input sub-operands may be determined, thereby achieving accurate control of the computation unit for the computations of the input sub-operands.

In some optional embodiments, on the basis of the embodiment shown in FIG. 2, controlling the computation unit to individually compute each input sub-operand to obtain the corresponding computation sub-result for each input sub-operand may include:

in response to that the operation type is a first type, taking the input sub-operand read each time as a current input sub-operand, and controlling the computation unit to compute the current input sub-operand to obtain the computation sub-result corresponding to the current input sub-operand.

For the first type, reference may be made to the foregoing content. For the unary operation, the input sub-operand read each time may include one sub-operand. For the binary operations, the input sub-operand read each time may include a set of sub-operands, that is, include the first sub-operand and the second sub-operand. Taking the bitwise AND operation as an example, since the high-bit operations and low-bit operations are independent of each other and do not affect each other, each time after the input sub-operand (the first sub-operand and the second sub-operand) is read, the current read input sub-operand may be input to the computation unit, and the computation unit is triggered by using the working clock to perform a bitwise AND operation on the input sub-operand, to obtain the computation sub-result corresponding to the current input sub-operand. For example, regarding a bitwise AND operation for the int16-first operand and the int16-second operand, the sub-operand is int8, a high 8-bit first sub-operand and a high 8-bit second sub-operand may be read first to compute a high 8-bit computation sub-result, and then a low 8-bit first sub-operand and a second sub-operand may be read to compute a low 8-bit computation sub-result.

In the embodiments, for the first type of operations where high bits and low bits are independent of each other, each input sub-operand may be individually computed to obtain the computation sub-result of each input sub-operand. In this way, the first type of computations with various data precision are completed by using the computation units with the unified data bit width, thereby improving the utilization of the computation unit and reducing hardware resource costs.

In some optional embodiments, on the basis of the embodiment shown in FIG. 2, controlling the computation unit to individually compute each input sub-operand to obtain the corresponding computation sub-result for each input sub-operand may include:

in response to that the operation type is a second type, taking the input sub-operand read each time as a current input sub-operand, and controlling the computation unit to compute the current input sub-operand to obtain a current computation sub-result and a current flag status that correspond to the current input sub-operand, where the current flag status indicates whether a status of the computation result corresponding to the input operand can be determined by the current computation sub-result; and determining, based on the current flag status, whether to read a status of a next input sub-operand. Correspondingly, the reading the input sub-operand from the respective storage space corresponding to each storage address information according to the order of all the storage address information may include: in response to that whether to read the status of the next input sub-operand is reading, reading the next input sub-operand from the storage space corresponding to the next input sub-operand according to the order of all the storage address information as the current input sub-operand. Correspondingly, controlling the computation unit to individually compute each input sub-operand to obtain the corresponding computation sub-result for each input sub-operand may further include: repeating the step of the controlling the computation unit to compute the current input sub-operand to obtain a current computation sub-result and a current flag status that correspond to the current input sub-operand. In this case, determining the computation result corresponding to the input operand based on the computation sub-result individually corresponding to each input sub-operand may include: determining the computation result corresponding to the input operand based on the computation sub-result and a flag status that correspond to each obtained input sub-operand.

The current flag status may include two statuses: a first status (such as 1 or true) and a second status (such as 0 or false). Whether to read a status of the next input sub-operand may include two statuses: reading and not reading. For example, 0 represents reading and 1 represents not reading; or 0 represents not reading and 1 represents reading. If the status of the next input sub-operand is reading, the next input sub-operand is read according to the order of all the storage address information for computation. The others may be obtained by analogy, until the status of the next input sub-operand is not reading. The computation result corresponding to the input operand may be determined based on the current computation sub-result.

In the embodiments, influence between the high-bit operations and the low-bit operations is represented by using the flag status, so that the influence between the high-bit operations and the low-bit operations may be considered in the computation result, thereby ensuring precision and validity of the computation result.

In some optional embodiments, for the addition operation, the input sub-operand read each time may be used as the current input sub-operand, and the computation unit may be controlled to compute the current input sub-operand to obtain the current computation sub-result corresponding to the current input sub-operand. The flag status may indicate whether the computation sub-result generates a carry. Correspondingly, it may be determined whether a previous flag status obtained from a previous time has generated a carry. If a carry is generated, the current computation sub-result may be added to the previous flag status to obtain the current computation sub-result and the current flag status. Similarly, after the input sub-operand is read next time, a next obtained computation sub-result is added to the current flag status to obtain a next flag status. The others may be obtained by analogy, to obtain the computation sub-result individually corresponding to each input sub-operand. The carry in the addition operation is represented by using the flag status, so that the precision and validity of the computation result may be ensured.

In some optional embodiments, for the addition operation, the input sub-operand may be read each time, and the computation unit may be used to compute the computation sub-result and the flag status that indicates whether a carry is generated. After all computation sub-results and flag statuses are obtained, the computation result corresponding to the input operand may be determined by integrating the computation sub-results and the flag statuses.

In some optional embodiments, on the basis of the embodiment shown in FIG. 2, controlling the computation unit to individually compute each input sub-operand to obtain the corresponding computation sub-result for each input sub-operand may include:

in response to that the operation type is a third type, taking the input sub-operand read each time as a current input sub-operand, and controlling the computation unit to compute the current input sub-operand to obtain the computation sub-result corresponding to the current input sub-operand. Correspondingly, determining the computation result corresponding to the input operand based on the computation sub-result individually corresponding to each input sub-operand may include: performing a post-processing operation on each computation sub-result according to an operation rule corresponding to the input operand, to obtain the computation result corresponding to the input operand.

For the operation rule corresponding to the input operand, reference may be made to the foregoing embodiments. The post-processing operation may include a shift operation, an addition operation, and the like, such as the operation of A * B described above. Details are not described herein.

In the embodiments, for an arithmetic operation with mixed precision and operations that may cause changes (such as doubling) in data bit width, the post-processing operation is performed on the computation sub-result to achieve operations for the third type of input operands. In this way, computations for operands with multiple precision may be completed by using the computation units with the unified data bit width, thereby greatly improving the utilization of the computation unit, reducing costs of hardware computing resources, and ensuring precision of data computation.

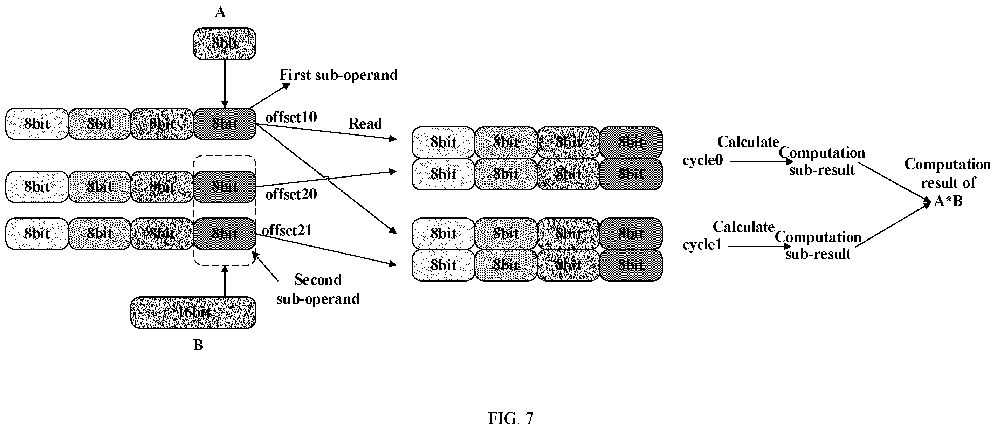

In some optional embodiments, FIG. 7 is a schematic diagram of a computation principle of a mixed-precision multiplication operation according to an exemplary embodiment of this disclosure. As shown in FIG. 7, the input operand includes the first operand A and the second operand B. A represents an int8-operand, and B represents an int16-operand. Different gray scales represent different input operands. 8 bits of A are stored in a storage space corresponding to the offset address offset10, 8 high bits of B are stored in a storage space corresponding to offset21, and 8 low bits of B are stored in a storage space corresponding to the offset20. During data reading, the first sub-operand in the offset10 and the low 8-bit second sub-operand in the offset20 may be read simultaneously (for example, in a cycle0) or sequentially. A multiplication operation is performed on the first sub-operand in the offset10 and the low 8-bit second sub-operand in the offset20 to obtain a computation sub-result corresponding to the low 8-bit second sub-operand. Subsequently, the first sub-operand in the offset10 and the high 8-bit second sub-operand in the offset21 may be read simultaneously or sequentially, and a multiplication operation is performed on 8 high bits of A and B to obtain a computation sub-result corresponding to the high 8-bit second sub-operand. Further, the post-processing operation such as shifting and addition may be performed on the two computation sub-results to obtain a computation result of A * B. The multiplication operation with mixed precision is implemented by using the computation units with the unified data bit width.

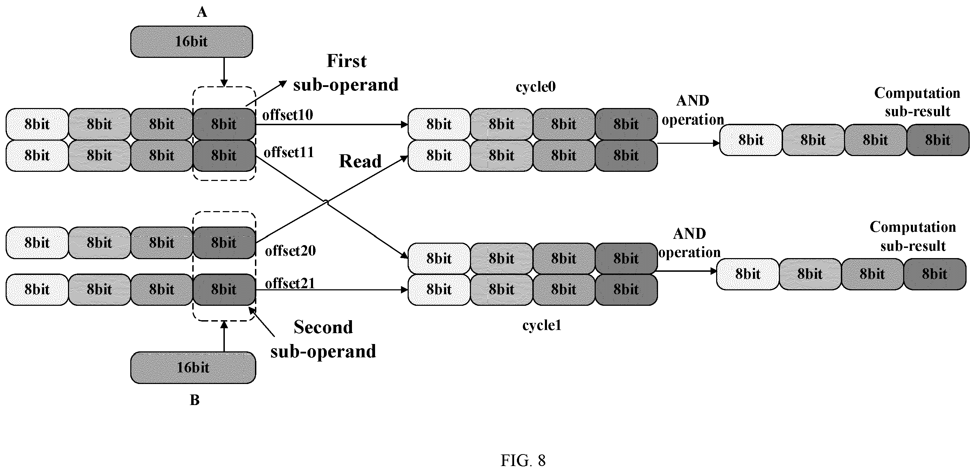

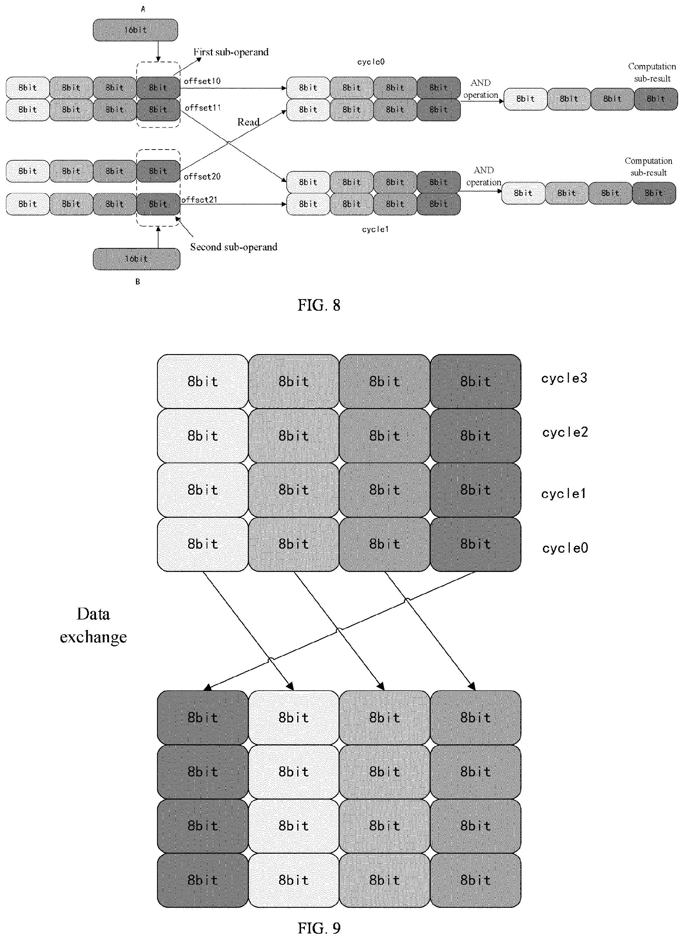

In some optional embodiments, FIG. 8 is a schematic diagram of an operation principle of a first type according to an exemplary embodiment of this disclosure. As shown in FIG. 8, taking a logical AND (that is, bitwise AND) operation as an example, the data precision of the first operand A and the second operand B is int16, and the data precision of the computation unit is int8. 8 high bits and 8 low bits of A are respectively stored in offset11 and the offset10, and 8 high bits and 8 low bits of B are respectively stored in the offset21 and the offset20. During reading, the low 8-bit first sub-operand and the low 8-bit second sub-operand may be read from the offset10 and the offset20 during the cycle 0, respectively. A low 8-bit computation sub-result may be obtained by using a bitwise AND computation unit. Subsequently, the high 8-bit first sub-operand and the high 8-bit second sub-operand may be read from the offset11 and the offset21 during a cycle 1, respectively. A high 8-bit computation sub-result may be obtained through the computation unit. The low 8-bit computation sub-result and the high 8-bit computation sub-result together constitute the computation result of the logic AND operation for A and B. At least one of the high 8-bit computation sub-result, the low 8-bit computation sub-result, and the computation result of the entire A and B may be output according to actual requirements. It may be learned that multiple valid computation results may be output simultaneously by using computation units with unified data precision, so as to meet requirements of users for different data computation results.

In some optional embodiments, FIG. 9 is a schematic diagram of an operation principle of data rearrangement and exchange according to an exemplary embodiment of this disclosure. As shown in FIG. 9, for operations such as data rearrangement and data exchanging, input operands may be loaded and stored in a register sequentially, and high-precision data exchange may be completed in multiple times (that is, multiple cycles) according to low precision.

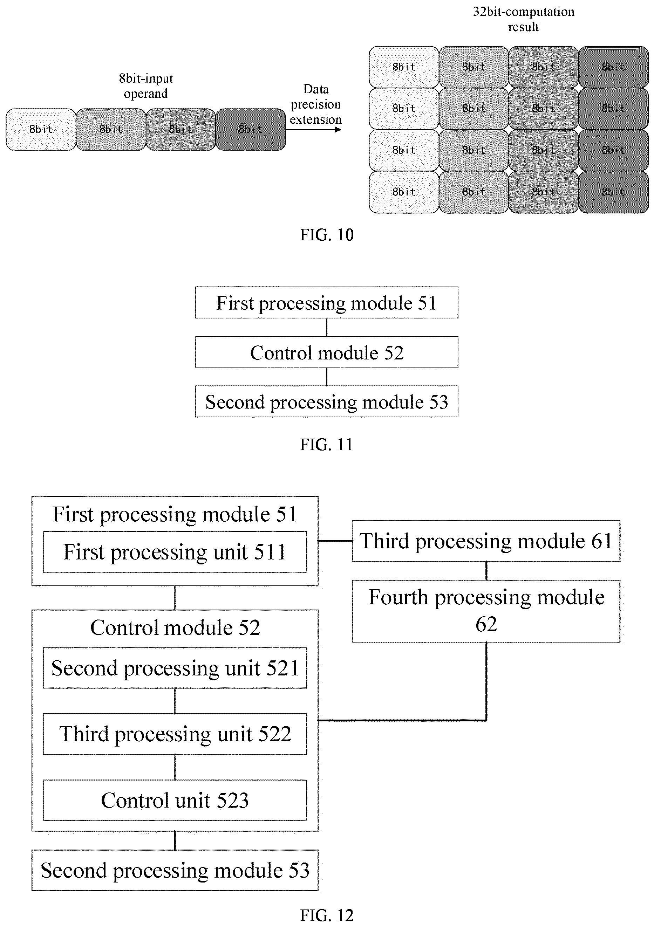

In some optional embodiments, data precision extension may also be implemented through the data rearrangement and storage mode disclosed in the embodiments of this disclosure. FIG. 10 is a schematic diagram of a principle of data precision extension according to an exemplary embodiment of this disclosure. As shown in FIG. 10, data precision extension may refer to conversion of low-precision data to high-precision data. For example, an 8-bit input operand is converted to a 32-bit input operand. Further, computations or other processing may be performed based on the 32-bit input operand.

In the embodiments of this disclosure, the rearrangement of the input operands is implemented by unifying a storage format of the input operands with various data precision, which may improve overall efficiency of subsequent data reading, computation, and data storage, and may help to complete computations for operands with mixed precision by using computation units with unified lower data precision. More important data or data having relatively greater influence on determining of the computation result may be computed first by controlling a data reading order. For example, for comparing values, finding a maximum value, and finding a minimum value, computations may be performed first if high bits are loaded, and whether to load low bits may be determined based on a high-bit computation sub-result, thereby further improving the computation efficiency.

The foregoing embodiments of this disclosure may be implemented separately or in any combination without conflict. This may be specifically set according to actual requirements, and is not limited in this disclosure.

Any multi-precision operand computation method provided in the embodiments of this disclosure can be implemented by any suitable device with a data processing capability, including but not limited to a terminal device and a server. Alternatively, any multi-precision operand computation method provided in the embodiments of this disclosure can be implemented by a processor. For example, the processor implements any multi-precision operand computation method described in the embodiments of this disclosure by invoking corresponding instructions stored in a memory. Details are not described below.

### Exemplary apparatus

FIG. 11 is a schematic diagram of a structure of a multi-precision operand computation apparatus according to an exemplary embodiment of this disclosure. The apparatus in this embodiment may be configured to implement the corresponding method embodiments of this disclosure. The apparatus shown in FIG. 11 may include a first processing module 51, a control module 52, and a second processing module 53.

The first processing module 51 may be configured to determine, based on first data precision of an input operand, at least one input sub-operand with second data precision that corresponds to the input operand. The second data precision is data precision supported by a computation unit, and a data bit width of the first data precision is greater than or equal to that of the second data precision.

The control module 52 may be configured to control the computation unit to individually compute each input sub-operand to obtain a corresponding computation sub-result for each input sub-operand.

The second processing module 53 may be configured to determine a computation result corresponding to the input operand based on the computation sub-result individually corresponding to each input sub-operand.

FIG. 12 is a schematic diagram of a structure of a multi-precision operand computation apparatus according to another exemplary embodiment of this disclosure.

In some optional embodiments, as shown in FIG. 12, the first processing module 51 may include a first processing unit 511.

The first processing unit 511 may be configured to determine, based on a preset data bit width, the at least one input sub-operand with the second data precision from the input operand according to a preset order.

The data bit width of the second data precision is same as the preset data bit width.

In some optional embodiments, the input operand may include a first operand and a second operand; and the first data precision may include a first data bit width of the first operand and a second data bit width of the second operand. As shown in FIG. 12, the first processing module 51 may include a first processing unit 511.

The first processing unit 511 may be configured to determine, based on the first data bit width of the first operand, at least one first sub-operand with the second data precision that corresponds to the first operand. At least one second sub-operand with the second data precision that corresponds to the second operand is determined based on the second data bit width of the second operand.

The input sub-operand includes the first sub-operand and the second sub-operand.

In some optional embodiments, the control module 52 may include a second processing unit 521, a third processing unit 522, and a control unit 523.

The second processing unit 521 may be configured to determine an order of respective storage address information corresponding to each first sub-operand and each second sub-operand according to an operation rule corresponding to the first operand and the second operand.

The third processing unit 522 may be configured to read, according to the order of the respective storage address information corresponding to each first sub-operand and each second sub-operand, the first sub-operand and the second sub-operand corresponding to the first sub-operand from storage spaces corresponding to the storage address information.

The control unit 523 may be configured to control the computation unit to compute the first sub-operand and the second sub-operand to obtain the computation sub-result corresponding to the first sub-operand.

In some optional embodiments, the apparatus in the embodiments of this disclosure may further include:
a third processing module 61, which may be configured to determine storage address information individually corresponding to each input sub-operand; and
a fourth processing module 62, which may be configured to store each input sub-operand separately into a storage space corresponding to the storage address information.

The control module 52 may be specifically configured to read each input sub-operand from the respective storage space corresponding to each storage address information based on each storage address information, and control the computation unit to individually compute each input sub-operand to obtain the corresponding computation sub-result for each input sub-operand.

In some optional embodiments, the control module 52 may include a second processing unit 521, a third processing unit 522, and a control unit 523.

The second processing unit 521 may be configured to determine an operation type corresponding to the input operand; and determine an order of all storage address information corresponding to all input sub-operands based on the operation type.

The third processing unit 522 may be configured to read the input sub-operand from the respective storage space corresponding to each storage address information according to the order of all the storage address information.

The control module 523 may be configured to control the computation unit to individually compute each input sub-operand to obtain a corresponding computation sub-result for each input sub-operand.

In some optional embodiments, the control unit 523 may be specifically configured to:

in response to that the operation type is a first type, take the input sub-operand read each time as a current input sub-operand, and control the computation unit to compute the current input sub-operand to obtain the computation sub-result corresponding to the current input sub-operand.

In some optional embodiments, the control unit 523 may be specifically configured to:
in response to that the operation type is a second type, take the input sub-operand read each time as a current input sub-operand, and control the computation unit to compute the current input sub-operand to obtain a current computation sub-result and a current flag status that correspond to the current input sub-operand, where the current flag status indicates whether a status of the computation result corresponding to the input operand can be determined by the current computation sub-result; and determine, based on the current flag status, whether to read a status of a next input sub-operand. Correspondingly, the third processing unit 522 may be specifically configured to: in response to that whether to read the status of the next input sub-operand is reading, read the next input sub-operand from the storage space corresponding to the next input sub-operand according to the order of all the storage address information as the current input sub-operand. Correspondingly, the control unit 523 may be specifically configured to repeat the step of controlling the computation unit to compute the current input sub-operand to obtain the current computation sub-result and the current flag status that correspond to the current input sub-operand. The second processing module 53 may be specifically configured to determine the computation result corresponding to the input operand based on the computation sub-result and a flag status that correspond to each obtained input sub-operand.

In some optional embodiments, the control unit 523 may be specifically configured to:
in response to that the operation type is a third type, take the input sub-operand read each time as a current input sub-operand, and control the computation unit to compute the current input sub-operand to obtain the computation sub-result corresponding to the current input sub-operand. Correspondingly, the second processing module 53 may be specifically configured to perform a post-processing operation on each computation sub-result according to an operation rule corresponding to the input operand, to obtain the computation result corresponding to the input operand.

For beneficial technical effects corresponding to the exemplary embodiments of this apparatus, reference may be made to the corresponding beneficial technical effects in the section of exemplary method described above, and details are not described herein again.

### Exemplary electronic device

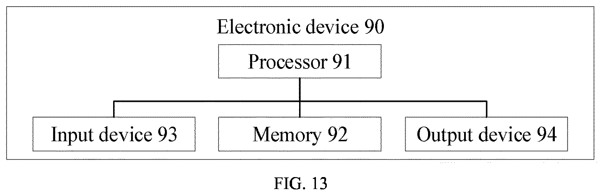

FIG. 13 is a diagram of a structure of an electronic device according to an embodiment of this disclosure. The electronic device includes at least one processor 91 and a memory 92.

The processor 91 may be a central processing unit (CPU) or another form of processing unit having a data processing capability and/or an instruction execution capability, and may control other components in the electronic device 90 to implement desired functions.

The memory 92 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 91 may execute the one or more program instructions to implement the method according to the various embodiments of this disclosure that are described above and/or other desired functions.

In an example, the electronic device 90 may further include an input device 93 and an output device 94. These components are connected to each other through a bus system and/or another form of connection mechanism (not shown).

The input device 93 may further include, for example, a keyboard and a mouse.

The output device 94 may output various information to the outside, and may include, for example, a display, a speaker, a printer, a communication network, and a remote output device connected to the communication network.

Certainly, for simplicity, FIG. 13 shows only some of components in the electronic device 90 that are related to this disclosure, and components such as a bus and an input/output interface are omitted. In addition, according to specific application situations, the electronic device 90 may further include any other appropriate components.

### Exemplary computer program product and computer readable storage medium

In addition to the foregoing method and device, embodiments of this disclosure may also provide a computer program product, which includes computer program instructions. When the computer program instructions are executed by a processor, the processor is enabled to perform the steps, of the method according to the embodiments of this disclosure, that are described in the "exemplary method" section described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to the embodiments of this disclosure, that are described in the "exemplary method" section described above.

The computer readable storage medium may be one readable medium or any combination of a plurality of readable media. The readable medium may be a readable signal medium or a readable storage medium. The readable storage medium includes, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A multi-precision operand computation method, **characterized in that** the multi-precision operand computation method comprises:
Determining (201), based on first data precision of an input operand, at least one input sub-operand with second data precision that corresponds to the input operand, wherein the second data precision is data precision supported by a computation unit, and a data bit width of the first data precision is greater than or equal to that of the second data precision;
controlling (202) the computation unit to individually compute each input sub-operand to obtain a corresponding computation sub-result for each input sub-operand; and
determining (203) a computation result corresponding to the input operand based on the computation sub-result individually corresponding to each input sub-operand.

2. The method according to claim 1, wherein before the controlling the computation unit to individually compute each input sub-operand to obtain a corresponding computation sub-result for each input sub-operand, the method further comprises:
determining (301) storage address information individually corresponding to each input sub-operand; and
storing (302) each input sub-operand separately into a storage space corresponding to the storage address information; and
the controlling the computation unit to individually compute each input sub-operand to obtain a corresponding computation sub-result for each input sub-operand comprises:
reading (202a) each input sub-operand from the respective storage space corresponding to each storage address information based on each storage address information, and controlling the computation unit to individually compute each input sub-operand to obtain the corresponding computation sub-result for each input sub-operand.

3. The method according to claim 1, wherein the determining, based on first data precision of an input operand, at least one input sub-operand with second data precision that corresponds to the input operand comprises:
Determining (201a), based on a preset data bit width, the at least one input sub-operand with the second data precision from the input operand according to a preset order, wherein the data bit width of the second data precision is same as the preset data bit width.

4. The method according to claim 2, wherein the reading each input sub-operand from the respective storage space corresponding to each storage address information based on each storage address information comprises:
determining an operation type corresponding to the input operand;
determining an order of all storage address information corresponding to all input sub-operands based on the operation type; and
reading the input sub-operand from the storage space corresponding to each storage address information according to the order of all the storage address information.

5. The method according to claim 4, wherein the controlling the computation unit to individually compute each input sub-operand to obtain a corresponding computation sub-result for each input sub-operand comprises:
in response to that the operation type is a first type, taking the input sub-operand read each time as a current input sub-operand, and controlling the computation unit to compute the current input sub-operand to obtain the computation sub-result corresponding to the current input sub-operand.

6. The method according to claim 4, wherein the controlling the computation unit to individually compute each input sub-operand to obtain a corresponding computation sub-result for each input sub-operand comprises:
in response to that the operation type is a second type, taking the input sub-operand read each time as a current input sub-operand, and controlling the computation unit to compute the current input sub-operand to obtain a current computation sub-result and a current flag status that correspond to the current input sub-operand, wherein the current flag status indicates whether a status of the computation result corresponding to the input operand can be determined by the current computation sub-result; and
determining, based on the current flag status, whether to read a status of a next input sub-operand;
the reading the input sub-operand from the storage space corresponding to each storage address information according to the order of all the storage address information comprises:
in response to that whether to read the status of the next input sub-operand is reading, reading the next input sub-operand from the storage space corresponding to the next input sub-operand according to the order of all the storage address information as the current input sub-operand;
the controlling the computation unit to individually compute each input sub-operand to obtain a corresponding computation sub-result for each input sub-operand further comprises:
repeating the step of the controlling the computation unit to compute the current input sub-operand to obtain a current computation sub-result and a current flag status that correspond to the current input sub-operand; and
the determining a computation result corresponding to the input operand based on the computation sub-result individually corresponding to each input sub-operand comprises:
determining the computation result corresponding to the input operand based on the computation sub-result and a flag status that correspond to each obtained input sub-operand.

7. The method according to claim 4, wherein the controlling the computation unit to individually compute each input sub-operand to obtain a corresponding computation sub-result for each input sub-operand comprises:
in response to that the operation type is a third type, taking the input sub-operand read each time as a current input sub-operand, and controlling the computation unit to compute the current input sub-operand to obtain the computation sub-result corresponding to the current input sub-operand; and
the determining a computation result corresponding to the input operand based on the computation sub-result individually corresponding to each input sub-operand comprises:
performing a post-processing operation on each computation sub-result according to an operation rule corresponding to the input operand, to obtain the computation result corresponding to the input operand.

8. The method according to any one of claims 1 to 7, wherein the input operand comprises a first operand and a second operand, and the first data precision comprises a first data bit width of the first operand and a second data bit width of the second operand;
the determining, based on first data precision of an input operand, at least one input sub-operand with second data precision that corresponds to the input operand comprises:
determining (2011), based on the first data bit width of the first operand, at least one first sub-operand with the second data precision that corresponds to the first operand; and
determining (2012), based on the second data bit width of the second operand, at least one second sub-operand with the second data precision that corresponds to the second operand, wherein the input sub-operand comprises the first sub-operand and the second sub-operand.

9. The method according to claim 8, wherein the controlling the computation unit to individually compute each input sub-operand to obtain a corresponding computation sub-result for each input sub-operand comprises:
determining (2021) an order of respective storage address information corresponding to each first sub-operand and each second sub-operand according to an operation rule corresponding to the first operand and the second operand;
reading (2022), according to the order of the respective storage address information corresponding to each first sub-operand and each second sub-operand, the first sub-operand and the second sub-operand corresponding to the first sub-operand from storage spaces corresponding to the storage address information; and
controlling (2023) the computation unit to compute the first sub-operand and the second sub-operand to obtain the computation sub-result corresponding to the first sub-operand.

10. A multi-precision operand computation apparatus, **characterized in that** the multi-precision operand computation apparatus comprises:
a first processing module (51), configured to determine, based on first data precision of an input operand, at least one input sub-operand with second data precision that corresponds to the input operand, wherein the second data precision is data precision supported by a computation unit, and a data bit width of the first data precision is greater than or equal to that of the second data precision;
a control module (52), configured to control the computation unit to individually compute each input sub-operand to obtain a corresponding computation sub-result for each input sub-operand; and
a second processing module (53), configured to determine a computation result corresponding to the input operand based on the computation sub-result individually corresponding to each input sub-operand.

11. The multi-precision operand computation apparatus according to claim 10, wherein the first processing module (51) comprises:
a first processing unit (511), configured to determine, based on a preset data bit width, the at least one input sub-operand with the second data precision from the input operand according to a preset order.

12. The multi-precision operand computation apparatus according to claim 10, wherein the control module (52) comprises:
a second processing unit (521), configured to determine an order of respective storage address information corresponding to each first sub-operand and each second sub-operand according to an operation rule corresponding to the first operand and the second operand;
a third processing unit (522), configured to read, according to the order of the respective storage address information corresponding to each first sub-operand and each second sub-operand, the first sub-operand and the second sub-operand corresponding to the first sub-operand from storage spaces corresponding to the storage address information; and
a control unit (523), configured to control the computation unit to compute the first sub-operand and the second sub-operand to obtain the computation sub-result corresponding to the first sub-operand.

13. The multi-precision operand computation apparatus according to claim 10, further comprises:
a third processing module (61), configured to determine storage address information individually corresponding to each input sub-operand; and
a fourth processing module (62), configured to store each input sub-operand separately into a storage space corresponding to the storage address information.

14. A computer readable storage medium, **characterized in that** the storage medium stores a computer program, and the computer program is used for implementing the method according to any one of claims 1 to 9.

15. An electronic device (90), **characterized in that** the electronic device comprises:
a processor (91); and
a memory (92), configured to store processor-executable instructions, wherein
the processor (91) is configured to read the executable instruction from the memory (92), and execute the instruction to implement the method according to any one of claims 1 to 9.
